# EUROPEAN PATENT APPLICATION

(11) **EP 1 548 365 A2**
(43) Date of publication of application: **29.06.2005**
(21) Application number: 04030126.9
(22) Date of filing: 20.12.2004
(51) Int. Cl.: F23R 3/56, F23R 3/52, F02C 3/16, F02C 5/02, F02K 7/00, F16C 39/06, H02K 7/18

(54) **Rotary combustor, and electricity generator comprising such a combustor**

(30) Priority: 24.12.2003 IT TO20031042
(71) Applicant: C.R.F. Società Consortile per Azioni, 10043 Orbassano (TO) (IT)
(72) Inventor: Perlo, Pietro, 10043 Orbassano (Torino) (IT); Innocenti, Gianfranco, 10043 Orbassano (Torino) (IT); Zvezdin, Anatolii, 10043 Orbassano (Torino) (IT); Repetto, Piermario, 10043 Orbassano (Torino) (IT); Paderi, Marzia, 10043 Orbassano (Torino) (IT)
(74) Representative: Quinterno, Giuseppe

(57) **Abstract**

The combustor (1) comprises a stationary structure (2) and at least one tubular annular rotor (3) able to rotate about a shaft (4) by means of contactless suspension devices (5-8), and in which is defined an annular combustion chamber (20) having a directed lateral efflux opening (21, 23) for the ejection of gases produced in the combustion.

The rotor (3) has a narrow circular slit (30) through which there extend, at predetermined angular intervals, into the combustion chamber (20), stationary injectors (31) of fuel and oxidizer, and associated igniters (32), also stationary.

A control unit (ECU, 35) controls the injectors (31) and the associated igniters (32) in a sequential cyclical manner, with predetermined time lags, in such a way as to generate and then sustain a detonation wave which propagates essentially continuously through the chamber (20), and bring about a rotation at controlled velocity of the rotor (3) due to the action of the gases emitted through the lateral effusion opening (21, 23).

## Description

The present invention relates to an innovative combustor of rotary type, usable for example as a motor, and in particular for driving an electricity generating machine, such as a dynamo in a fuel-fired power station.

The combustor according to the invention is essentially characterized in that it comprises
- a stationary structure,
- at least one tubular rotor of circular annular general shape, supported by the said structure in a rotatable manner about a shaft by contactless suspension means, in which is defined at least one annular combustion chamber having at least one directed lateral effusion opening for the ejection of gases produced in the combustion;
the said at least one rotor having a narrow circular slit through which there extend, at predetermined angular intervals, into the said combustion chamber, controlled stationary injector means of fuel and oxidizer, and associated ingniter means, also stationary; and
control means designed to control the said injector means and the associated igniter means in a sequential cyclical manner, with predetermined time lags, in such a way as to generate a detonation wave which propagates essentially continuously through the said annular chamber, and bring about a rotation at controlled velocity of the rotor due to the action of the gases emitted through the said at least one lateral effusion opening.

The invention also relates to an electricity generator comprising a rotor and a stator, and in which the rotor is turned by a rotary combustor of the type defined above.

Other features and advantages of the invention will become clear in the course of the following detailed description, which is presented purely by way of a non-limiting example, with reference to the appended drawings, in which:
Figure 1 is a plan view from above of a rotary combustor according to the present invention; and
Figure 2 is a sectional view, essentially on the plane marked II-II in Figure 1.

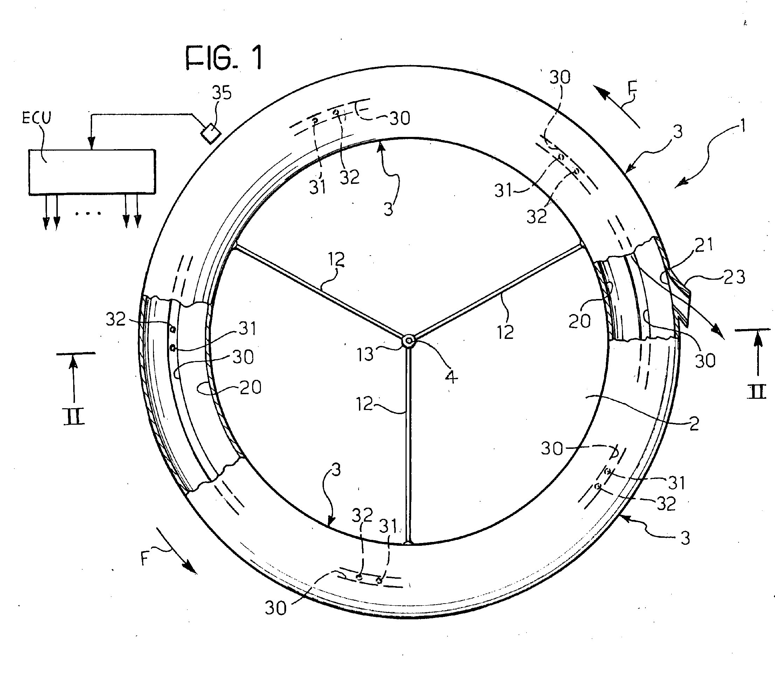

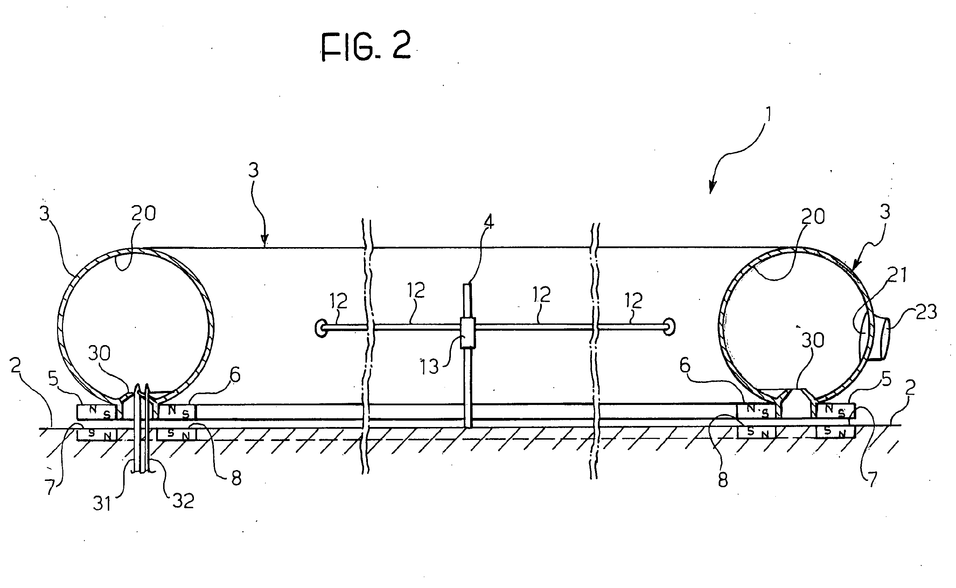

In Figures 1 and 2, the number 1 is a general reference for a rotary combustor according to the present invention.

This combustor 1 comprises a stationary structure, shown schematically in Figure 2, where it is marked 2.

In the illustrative embodiment depicted, the rotary combustor 1 also comprises a tubular rotor 3 of circular annular shape. This rotor 3 is supported rotatably about a shaft 4 by contactless suspension means. In the illustrative embodiment depicted, these suspension means comprise annular permanent magnets 5 and 6 mounted on the rotor 3 and magnetized in a direction parallel to the shaft 4, all having the same magnetic polarity, for example "South", pointing downwards. Facing the annular magnets 5 and 6 mounted on the rotor 3 are corresponding annular magnets 7 and 8 mounted on the stationary structure 2. The magnets 7 and 8 are similarly magnetized parallel to the shaft 4, and have the same polarity on top as that directed towards them by the magnets 5 and 6, for example "South".

The magnetic suspension arrangement described above is, in its simplicity and schematic nature, purely indicative. The rotor 3 can be suspended relative to the stationary structure 2 by contactless, particularly magnetic, suspension schemes constructed by techniques known per se.

Other ways of achieving contactless suspension, particularly of magnetic type, are described for example in the previous European patent application No. 04017945.9 filed in the name of the same Applicant on 29 July 2004 relating to a "flying machine".

With reference to Figures 1 and 2, in the embodiment illustrated, a plurality of spokes 12 are connected to the rotor 3 and interconnected centrally to a hub 13 mounted rotatably about the shaft 4.

In the embodiment shown in Figures 1 and 2, the tubular rotor 3 defines in its interior an annular combustion chamber 20, which extends essentially all the way around the circumference of the rotor.

The combustion chamber 20 has at least one lateral opening 21 for the ejection of the combustion gases. Connected to this opening is an exhaust nozzle 23, suitably shaped in a manner known per se and pointing in the direction forming an angle relative to the radial direction of the rotor.

In the part of the rotor 3 facing the stationary structure 2 is a narrow circular slit marked 30, through which a plurality of controlled injectors of fuel and oxidizer, marked 31, extend into the combustion chamber 20. These injectors each have a controlled igniter device marked 32.

The injectors 31 and the igniters 32 are stationary, that is integral with the structure 2.

The fuel and oxidizer injected into the combustion chamber 20 may for example be hydrogen and oxygen or, more generally, hydrocarbons and combinations thereof (including nanoparticles that catalyse the combustion process or particles for increasing the specific energy of the fuel) and air, which may be compressed.

Connected to the rotary combustor 1 is an electronic control unit marked ECU in Figure 1. This unit is designed to control, by means of interface devices known per se and not illustrated, the injectors 31 and the associated igniters 32, in predetermined ways, so as to trigger in the chamber 20 a combustion reaction capable of propagating itself in this chamber at supersonic speed, in other words actually generating a detonation wave. The control unit ECU is designed in particular to activate the injectors 31 and the associated igniters 32 in a sequential cyclical manner, with predetermined time lags, in such a way as to generate and then sustain a detonation wave that propagates essentially continuously in the annular chamber 20.

The partial ejection or bleeding of exhaust gases through the exhaust nozzle 23 will cause, by reaction, a rotation of the rotor 3 in the direction indicated by the arrows F in Figure 1.

Advantageously the rotational velocity of the rotor can be controlled by the unit ECU in a closed loop, as a function of the actual rotational velocity of the rotor sensed by means of a sensor 35 (Figure 1) of a type known per se.

Advantageously, in order to ensure that the combustion reaction in the chamber 20 takes place by detonation other than by mere deflagration, the length of the said chamber 20 is greater than or equal to approximately 40 times the mean transverse dimension of this chamber, and is preferably between 40 and 100 times this mean transverse dimension.

A great number of different alternative embodiments will be obvious to those skilled in the art.

For example, in one alternative embodiment not illustrated, the rotary combustor may comprise two rotors of the type described above, supported rotatably by contactless suspension means from a common stationary supporting structure, the rotors rotating in the same direction, or in opposite directions.

The rotary combustors produced in accordance with the present invention can be used as micromotors, particularly for driving electricity generating machines. In these applications, in a manner not illustrated, the or each rotor of a combustor of the types described above is connected to the rotor of such an electricity generating machine.

Advantageously, at least some of the rotating magnets used for the suspension of the rotor or rotors of a rotary combustor according to the invention may also be used synergistically as the induction part of such an electricity generating machine.

Clearly, without departing from the principle of the invention, the forms of embodiment and details of construction can be considerably altered from that which has been described and illustrated purely by way of non-limiting example, without thereby departing from the scope of the invention as defined in the accompanying claims.

## Claims

1. Rotary combustor (1) comprising
- a stationary structure (2),
- at least one tubular rotor (3) of circular annular general shape, supported by the said structure (2) in a rotatable manner about a shaft (4) by contactless suspension means (5-8), in which is defined at least one annular combustion chamber (20) having at least one directed lateral efflux opening (21, 23) for the ejection of gases produced in the combustion;
the said at least one rotor (3) having a narrow circular slit (30) through which there extend, at predetermined angular intervals, into the said combustion chamber (20), controlled stationary injector means (31) of fuel and oxidizer, and associated ingniter means (32), also stationary; and
control means (ECU, 35) designed to control the said injector means (31) and the associated igniter means (32) in a sequential cyclical manner, with predetermined time lags, in such a way as to generate and sustain a detonation wave which propagates essentially continuously through the said annular chamber (20), and bring about a rotation at controlled velocity of the rotor (3) due to the action of the gases emitted through the said at least one lateral effusion opening (21, 23).

2. Rotary combustor according to Claim 1, in which the said combustion chamber (20) has a length greater than or equal to approximately 40 times the mean transverse dimension of the chamber (20).

3. Rotary combustor according to Claim 1 or 2, in which the said contactless suspension means are magnetic suspension means (5-8).

4. Rotary combustor according to Claim 3, in which the said suspension means comprise a plurality of permanent magnets (5-8).

5. Electricity generator comprising a stator and, connected to a rotary combustor according to one or more of the preceding claims, a rotor.

6. Electricity generator according to Claim 5, incorporating a rotary combustor according to Claim 4, in which magnets (5, 6) of the abovementioned suspension means are used as the induction part of the generator.
